# EUROPÄISCHE PATENTSCHRIFT

(11) **EP 1 452 218 B1**
(45) Veröffentlichungstag und Bekanntmachung des Hinweises auf die Patenterteilung: **09.05.2012**
(21) Anmeldenummer: 04004474.5
(22) Anmeldetag: 27.02.2004
(51) Int. Cl.: B01D 50/00, F24F 3/044, F24F 13/20, F26B 21/00, F26B 25/00

(54) **Vorrichtung zur Prozessluftkonditionierung und/oder -entsorgung**
Device for conditioning process air and/or disposal
Dispositif pour conditioner un air de traitement et/ou son élimination

(30) Priorität: 28.02.2003 DE 10309988
(43) Veröffentlichungstag der Anmeldung: 01.09.2004
(73) Patentinhaber: Hüttlin, Herbert, 79585 Steinen (DE)
(72) Erfinder: Hüttlin, Herbert, 79585 Steinen (DE)
(74) Vertreter: Heuckeroth, Volker

(56) Entgegenhaltungen:
- EP-A1- 0 597 136
- EP-A2- 0 532 874
- DE-A- 2 316 856
- DE-A- 2 717 610
- DE-A1- 3 712 279
- DE-C- 878 344

## Beschreibung

Die Erfindung betrifft eine Vorrichtung zur Prozessluftkonditionierung und/oder -entsorgung, mit einem sich im Wesentlichen horizontal erstreckenden Gehäuse, in dessen Innenraum eine Mehrzahl von Aggregaten zur Behandlung der Prozessluft angeordnet sind, gemäß dem Oberbegriff des Anspruchs 1.

Eine Vorrichtung mit den strukturellen Merkmalen des Oberbegriffs des Anspruchs 1 ist aus DE 27 17 610 A bekannt.

Das vorstehend genannte Dokument offenbart eine Vorrichtung zum Abscheiden von staubförmigen Teilen aus einem Luftstrom, insbesondere zur Bewetterung von Gruben. Die Vorrichtung umfasst einen Fliehkraftabscheider, eine Luftbefeuchtungseinrichtung, eine Anordnung von Venturi-Rohren, ein Gebläse und einen Antriebsmotor für das Gebläse. Das Gehäuse des Zyklonabscheiders ist zylindrisch ausgebildet. Die gesamte Vorrichtung ist an Kufen befestigt, damit die Vorrichtung zusammen mit den Kufen auf einem Untergrund verschiebbar ist.

Aus EP-A-0 597 136 ist eine Vorrichtung zum Abfördern und Reinigen von Lötrauch bekannt. Diese Vorrichtung weist ein insgesamt zylindrisches Gehäuse auf. In dem Gehäuse sind mehrere Filter und eine Pumpe angeordnet.

EP-A-0 532 874 offenbart eine Klimaanlage für den Humanbereich, die in einem Gehäuse eine Mehrzahl von Filterpatronen aufweist.

Eine erfindungsgemäße Vorrichtung der eingangs genannten Art wird im Unterschied zu den vorstehend genannten Vorrichtungen beispielsweise im Zusammenhang mit einer Prozessapparatur zur Durchführung von Trocknungs-, Granulier- und Filmcoating-Prozessen verwendet und dient dabei insbesondere zur definierten Aufbereitung und/oder Nachbehandlung der Prozessluft, die in den vorstehend genannten Prozessen benötigt wird.

Wird die Vorrichtung als Zuluftanlage verwendet, erfüllen die in dem Gehäuse angeordneten Aggregate Konditionieraufgaben, beispielsweise die Aufgabe der Filtration, der spezifischen Entfeuchtung, der Taupunktabkühlung, der Erwärmung mittels Wärmeaustauschern (Dampf, Heißwasser, Warmwasser oder elektrisch geführt), und/oder der Förderung der notwendigen Luftmenge mit dem notwendigen statischen Druck mittels Ventilatoren.

Wenn die Vorrichtung als Abluftanlage verwendet wird, erfüllen die in dem Gehäuse vorhandenen Aggregate die Funktion der Restwärmenutzung, der Filtration sowie die Abführung definierter Luftmengen mit entsprechend verfügbaren Drücken.

Insgesamt erfüllen Vorrichtungen zur Prozessluftkonditionierung und/oder -entsorgung sowohl die Aufgabe eines hygienischen Abschlusses als auch einer Luft- und Körperschalldämmung gegenüber der Umgebung sowohl im gebäudetechnischen Aufstellungsbereich als auch im Bedienerbereich der Prozessanlagen selbst.

Zur Erfüllung all dieser Aufgaben wurden die erforderlichen Aggregate bzw. Einzelkomponenten anfänglich mittels Rohr- und Kanal-Formstücken miteinander verbunden und zu einer Funktionseinheit zusammengeführt, das heißt in Form einer sogenannten "offenen Installation".

In späteren Entwicklungen solcher Vorrichtungen wurden alle notwendigen Aggregate der Vorrichtung in einem einzigen Gehäuse zusammengefasst. Solche Gehäuse werden als "Monoblocs" bezeichnet.

Die Gehäuse der bekannten Vorrichtungen bestehen aus einem kubischen Rahmenchassis mit allseitigem, meist doppelwandigen isolierten Abdeckungen, die fest mit dem kubischen Rahmen verschraubt oder als Türen ausgeführt sind, damit eine entsprechende Wartung und Kontrolle der einzelnen Aggregate im abgestellten Zustand der Vorrichtung erfolgen kann.

Üblicherweise erfolgt dabei der Einbau der Aggregate in das Gehäuse bzw. deren späterer Zugang zu Wartungszwecken von der Längsseite über die luftdicht verschließbaren Türen her. Die besonders leichte Zugänglichkeit des Innenraums des Gehäuses, insbesondere zu Wartungs- und Reinigungszwecken, ist besonders wichtig, da die immer größer gewordenen Anforderungen an die Reinhaltung der Prozessluft auch immer höhere Anforderungen an die Reinigbarkeit der Innenoberflächen des Gehäuses stellen. Bei den bekannten Monobloc-Einheiten in kubischer Bauweise ist die Bedienung und Wartungskontrolle der Aggregate jedoch erschwert, da die Zugänglichkeit der einzelnen Einheiten über die Türen bzw. Deckel von einer der Längsseiten her, also nicht über die Stirnseite, sehr eingeschränkt ist und das Wartungspersonal somit nie direkt auf den Querschnitt einer Monobloc-Einheit schauen kann. Um den Querschnitt einer Monobloc-Einheit einzusehen, bedarf es daher immer einer 90°-Drehung der einzelnen Einheit, was den Wartungs- und Bedienungsaufwand nachteiliger Weise erhöht.

Weitere Anforderungen an eine Vorrichtung der eingangs genannten Art sind hygienischer Art. Derartige Monoblocs müssen gasdicht sein, das heißt eine Vermischung der Prozessluft im Innenraum des Gehäuses mit der Umgebungsluft muss unter allen Umständen vermieden werden, und insbesondere dann, wenn die Vorrichtung in Überdruck oder Unterdruck gefahren wird.

Dies gilt sowohl bei Vorrichtungen im Zuluftbetrieb, bei dem keine unreinen Luftmengen von außen in den Innenraum des Gehäuses dringen dürfen, als auch bei Vorrichtungen im Abluftbetrieb muss dafür gesorgt werden, dass eine Kontamination der Umgebung mit Inhaltsstoffen, die in der Prozessabluft enthalten sind, ausgeschlossen wird.

Durch die bei kubischen Monobloc-Einheiten zwangsläufig vorhandenen Ecken und Kanten an den Verbindungsstellen der einzelnen Monobloc-Einheiten entstehen in der Regel keine optimal hygienischen Oberflächen innerhalb eines solchen Monobloc-Gehäuses, da sich in diesen Ecken und Kanten Verunreinigungen ansammeln können, die nur unzureichend oder mit hohem Aufwand beseitigt werden können. Insbesondere der Einbau eines systemintegrierten "washing-in-place" oder "cleaning-in-place" Reinigungssystems führt bei den bekannten Vorrichtungen in kubischer Bauweise nicht zu den gewünschten Erfolgen, da keine ausreichende Sicherheit dafür gegeben ist, dass das Restwasser auf der plan-ebenen Bodenfläche tatsächlich ablaufen kann und nicht etwa an Dichtungen, Ecken und Kanten verbleibt und somit zu unerwünschten Feucht-Nährboden führt. Somit sind die bekannten Vorrichtungen in kubischer Bauweise hinsichtlich ihrer hygienischen Eigenschaften nachteilig.

Selbst wenn die statischen und pneumatischen Dichtungen von Monoblocabdeckungen und Bedienungstüren ihre dicht schließende Aufgabe erfüllen, so sind insbesondere die Ecken solcher Deckel und Türen stets problematisch hinsichtlich ihrer Dichtungseigenschaften. Insbesondere wenn die Prozessluft im Innenraum des Gehäuses unter einem hohen Überdruck oder Unterdruck steht, kann die Druckstabilität und Dichtheit der Vorrichtung der bekannten Art nicht stets gewährleistet sein. Bei den bekannten Vorrichtungen in kubischer Bauweise besteht nämlich das Problem darin, dass sich die planen Gehäusewände durch den wirksamen Druck der Dichtungen verbiegen, was die Dichtheit nachteilig beeinträchtigt. Bei bekannten Vorrichtungen führen durch die Dichtungen, die dann außerdem nachteiliger Weise statischer Natur sind, außerdem oft Schraubverbindungen und Befestigungen hindurch, was die Dichtheit des gesamten Systems in Frage stellt.

Darüber hinaus haben herkömmliche Vorrichtungen in kubischer Bauweise u.a. dem Nachteil, dass die Profilrahmen unerwünschte Wärme- bzw. Kältebrücken darstellen.

Ferner sind solche Vorrichtungen in kubischer Bauweise nicht in der Lage, die erforderlichen Prozessluftdrücke von 100-10.000 Pa zu transportieren, ohne das die Gehäusewände als Schwingungsmembranen wirken.

Der Erfindung liegt daher die Aufgabe zugrunde, eine Vorrichtung der eingangs benannten Art dahingehend weiter zu bilden, dass die vorstehend genannten Nachteile vermieden werden, dass insbesondere die Hochdruckstabilität und Dichtheit des Gehäuses der Vorrichtung bei verringertem konstruktivem Aufwand und insbesondere die hygienischen Eigenschaften verbessert werden, wobei die Vorrichtung wartungsfreundlich und leicht zu reinigen sein soll.

Erfindungsgemäß wird diese Aufgabe hinsichtlich der eingangs genannten Vorrichtung durch das Kennzeichen des Anspruchs 1 gelöst.

Durch die zylindrische Ausgestaltung des Gehäuses der Vorrichtung kann die Druckstabilität und Dichtheit des Gehäuses ohne zusätzliche technische Maßnahmen gegenüber den bekannten kubischen Gehäusen wesentlich verbessert werden, während bei den bekannten kubischen Monobloceinheiten eine Erhöhung der Druckstabilität und Dichtheit nur mit einem vergleichsweise hohen technischen Aufwand erreicht werden kann. Die erfindungsgemäße Vorrichtung zeichnet sich somit auch durch ihren geringeren technischen und damit geringeren Kostenaufwand aus. Insbesondere gegenüber pulsierenden Beanspruchungen, beispielsweise bei wechselnden hohen Unter- und Überdrücken, hat das zylindrische Gehäuse der erfindungsgemäßen Vorrichtung den Vorteil einer wesentlich höheren Belastbarkeit als ein kubisches Gehäuse. Aber auch die Reinigbarkeit des zylindrischen Gehäuses ist gegenüber dem kubischen Gehäuse wesentlich verbessert, da an der Innenseite des Gehäuses keine Ecken oder Nischen vorhanden sind, die schwer zu reinigen wären. So kann bspw. eine bereits oben erwähnte "washing-in-place" oder "cleaning-in-place" Reinigungseinrichtung mit einem durch das Gehäuse verlaufenden Rohrsystem vorgesehen werden, wobei im Gegensatz zu den bekannten kubischen Gehäusen nunmehr der Vorteil besteht, dass die Reinigungsflüssigkeit immer zur Sohle des zylindrischen Gehäuses läuft und dort über einen integrierten Ablauf bestmöglichst abgeführt werden kann.

Die erfindungsgemäße Vorrichtung lässt sich besonders vorteilhaft in prozesstechnischen Anlagen in chemischen und pharmazeutischen Betrieben einsetzen, die häufig mit brennbaren Lösungsmitteln gefahren werden, was automatisch eine gewisse Explosionsgefahr mit sich bringt. Die Gesetzesvorschriften zum Bau solcher Anlagen setzen eine Druckstoßfestigkeit bis 10 bar voraus, wenn keine entsprechende Druckentlastungsöffnung vorgesehen ist, mindestens aber eine Druckstoßfestigkeit bis 3,5 bar, wenn eine Druckentlastungsmembrane im System vorgesehen wird. Eine solche geforderte Druckstoßfestigkeit kann mit der erfindungsgemäßen zylindrischen Bauweise des Gehäuses in konstruktiv einfacher Ausgestaltung erreicht werden, während eine solche geforderte Druckstoßfestigkeit bei einer kubischen Bauweise nur mit einem äußerst hohen technischen Aufwand realisiert werden kann.

Das Gehäuse ist in Längsrichtung aus mehreren von einander trennbaren Gehäuseschüssen zusammengesetzt, die im Wesentlichen horizontal hintereinander angeordnet sind.

Das Gehäuse ist somit insgesamt modular aufgebaut, wobei vorzugsweise jeder Gehäuseschuss ein einzelnes Aggregat aufnimmt. Die einzelnen Gehäuseschüsse sind dabei an ihren Stirnseiten offen, so dass sie über die Stirnseiten zugänglich sind. Seitliche Wartungstüren oder Wandelemente, die geöffnet werden können, können somit durch die Trennbarkeit der einzelnen Gehäuseschüsse voneinander weggelassen werden, wodurch die Druckstabilität und Druckdichtigkeit des Gehäuses der erfindungsgemäßen Vorrichtung noch weiter verbessert werden kann.

Die einzelnen Gehäuseschüsse sind in Längsrichtung an einer oder mehreren Schienen verfahrbar gelagert.

Hierbei ist von Vorteil, dass die einzelnen Gehäuseschüsse nach dem Trennen ihrer Verbindung soweit auseinander gefahren werden können, dass sie von den Stirnseiten her einen entsprechenden Zugang zu dem jeweiligen darin enthaltenden Aggregat bieten. Durch die Lagerung der Gehäuseschüsse auf einer oder mehreren Schienen lassen sich die Gehäuseschüsse besonders leicht verfahren. Insgesamt ist die Zugänglichkeit der einzelnen Gehäuseschüsse auf diese Weise in vorteilhafter Weise weiter verbessert.

In einer bevorzugten Ausgestaltung ist das Gehäuse doppelwandig ausgebildet.

Diese Maßnahme hat den Vorteil, dass das zylindrische Gehäuse den Innenraum gegenüber der Umgebung besser isolieren kann. Während eine doppelwandige Ausgestaltung auch bei kubischen Gehäusen realisierbar ist, ist sie dort jedoch mit einem technisch höheren Aufwand verbunden, während bei einem zylindrischen Gehäuse durch unterschiedliche Innen- und Außendurchmesser der beiden Wände des Gehäuses besonders einfach eine Doppelwandigkeit erreicht werden kann.

In einer weiteren bevorzugten Ausgestaltung sind die einzelnen Gehäuseschüsse über an ihren stirnseitigen Enden angeordnete Verschlüsse oder über eine oder mehrere die Gehäuseschüsse überspannende Spannstangen dicht miteinander verbunden.

Durch diese Maßnahme werden vorteilhafterweise schnell-lösbare Verbindungen zwischen den einzelnen Gehäuseschüssen geschaffen. Wenn jeder Gehäuseschuss mit seinem benachbarten Gehäuseschuss separat über an den benachbarten stirnseitigen Enden angeordnete Verschlüsse verbunden bzw. verbindbar ist, hat dies den Vorteil, dass die gesamte Monobloceinheit mit den mehreren Gehäuseschüssen selektiv an der gewünschten Stelle geöffnet werden kann, um beispielsweise an einem bestimmten Aggregat eine Wartungsarbeit durchzuführen. Es können aber auch Spannstangen vorgesehen sein, die das gesamte Gehäuse, das heißt alle Gehäuseschüsse übergreifen, was den Vorteil hat, dass ein solcher Verschließmechanismus nur an einer Stelle betätigt werden muss, um alle Gehäuseschüsse voneinander zu trennen bzw. alle Gehäuseschüsse miteinander zu verbinden.

In einer weiteren bevorzugten Ausgestaltung sind benachbarte Gehäuseschüsse an ihren Verbindungsstellen mittels pneumatischer Dichtungen abgedichtet.

Während statische Dichtungen den Nachteil haben, dass sie mit der Zeit erlahmen, porös oder durch nicht sachgemäße Handhabung beschädigt und so ihrer Aufgabe im Laufe der Zeit nicht gerecht werden können, haben pneumatische Dichtungen den Vorteil, diesen Beschränkungen nicht zu unterliegen. Bei den bekannten Vorrichtung mit kubischem Gehäuse waren jedoch pneumatische Dichtungen zwischen den planen Seitenwänden und dem Rahmengehäuse nicht einsetzbar, da sich die planen Flächenelemente durch den wirksamen Druck der Dichtungen, die bei 1,5 bis 3,0 bar liegen, verbiegen können, was den Einsatz pneumatischer Dichtungen bei den bekannten Vorrichtungen stark eingeschränkt hat.

Der weitere Vorteil der zylindrischen Ausgestaltung des Gehäuses in Verbindung mit den trennbaren Gehäuseschüssen besteht darin, dass als Dichtungen zwischen den einzelnen Gehäuseschüssen runde Ringdichtungen verwendet werden können, die im Unterschied zu den bekannten Vorrichtungen mit kubischen Gehäusen keine problematischen Ecken besitzen, die zu Undichtigkeiten Anlass geben können.

Eine weitere Möglichkeit der Verbindung der einzelnen Gehäuseschüsse kann in schnell-lösbaren Rohrverbindungen oder auch Teleskoprohranschlüssen bestehen, deren Teleskopstellen dann zur Erzielung der erforderten Dichtigkeit mit einer entsprechenden Dichtung abgedichtet werden.

Weiter ist es bevorzugt, wenn die Gehäuseschüsse außenseitig Gleitrollen aufweisen, mit denen sie an der bzw. den Schienen gelagert sind.

Die Lagerung der einzelnen Gehäuseschüsse über Gleitrollen an der bzw. den Schienen führt zu einer besonders leichten Verschiebbarkeit der einzelnen Gehäuseschüsse, wodurch die Handhabung bzw. Zugänglichkeit des Innenraums des Gehäuses zu Wartungs- oder Reinigungszwecken weiter verbessert ist.

In weiteren bevorzugten Ausgestaltungen ist jeweils eine Schiene seitlich des Gehäuses angeordnet, oder die Gehäuseschüsse sind an einer über dem Gehäuse angeordneten Schiene aufgehängt.

Bei der letzteren Ausgestaltung wird der weitere Vorteil erzielt, dass die über dem Gehäuse geführte Schiene bei Wartungsarbeiten nicht störend im Wege ist. Die über dem Gehäuse angeordnete Schiene kann ggf. an beiden Enden oder zwischen diesen mit einem Rahmen auf dem Boden abgestützt und mit diesem fest verbunden sein.

In einer weiteren bevorzugten Ausgestaltung ist eines der Aggregate ein Ventilator, und das Gehäuse bildet gleichzeitig das Ventilatorgehäuse.

Diese Maßnahme hat den Vorteil, dass der technische Aufwand der Vorrichtung noch weiter verringert wird, da sich aufgrund der im Querschnitt runden Ausgestaltung des Gehäuses auch ein üblicherweise in einer solchen Vorrichtung vorhandener Ventilator auf einfachste Weise in das Gehäuse integrieren lässt, ohne dass wie bei den herkömmlichen kubischen Monobloceinheiten ein separates rundes Ventilatorgehäuse innerhalb des kubischen Gehäuses angeordnet werden muss. Die erfindungsgemäß vorgesehene zylindrische Bauweise der Vorrichtung gestattet somit vorteilhafter Weise die direkte Integration insbesondere von Hochleistungs-Ventilator-Laufrädern bspw. jeweils an den Stirnseiten des Gehäuses, womit der entsprechende Gehäuseschuss automatisch zum Ventilatorgehäuse wird. Der mit dem Ventilatorlaufrad gekoppelte Antriebsmotor kann dabei am Gehäuseschussendstück schwingungsdämpfend gelagert werden, und es ist nicht erforderlich, den gesamten Ventilator an seinem Spiralgehäuse jeweils an der Saug- bzw. Druckseite mit einer schwingungsdämpfenden Manschette zu versehen und den Ventilator zusätzlich am Gehäusebock mit Schwingungsdämpfern zu lagern. Hieraus entsteht eine erhebliche Kosteneinsparung bei der Herstellung der erfindungsgemäßen Vorrichtung.

Weitere Vorteile und Merkmale ergeben sich aus der nachfolgenden Beschreibung der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in Bezug auf diese hiernach näher beschrieben. Es zeigen:
- Fig. 1: eine Seitenansicht einer Vorrichtung zur Prozessluftkonditionierung und/oder -entsorgung im Längsschnitt in betriebsbereitem Zustand;
- Fig. 2: die Vorrichtung in Fig. 1 in einem Zustand, in dem einzelne Aggregate der Vorrichtung nach Öffnen des Gehäuses zugänglich sind;
- Fig. 3: eine Ansicht der Vorrichtung in Fig. 1 in Richtung der Pfeile III-III in Fig. 1;
- Fig. 4: eine Ansicht der Vorrichtung in Fig. 1 in Richtung der Pfeile IV-IV in Fig. 2;
- Fig. 5: eine mit Fig. 1 vergleichbare Darstellung eines gegenüber Fig. 1 geringfügig abgewandelten Ausführungsbeispiels einer Vorrichtung;
- Fig. 6: eine Stirnansicht eines einzelnen Gehäuseschusses der Vorrichtung in Fig. 5; und
- Fig. 7: ein Ende der Vorrichtung in Fig. 5, das einen Teleskoprohranschluss der Vorrichtung darstellt.

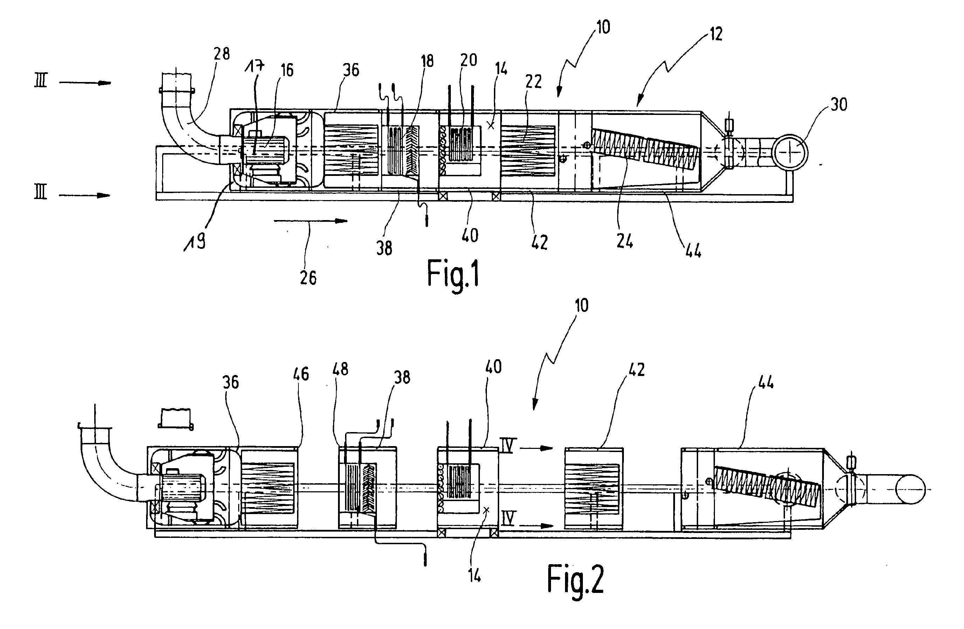

In Figuren 1 bis 4 ist eine mit dem allgemeinen Bezugszeichen 10 versehene Vorrichtung zur Prozessluftkonditionierung und/oder -entsorgung dargestellt.

Die Vorrichtung 10 wird im Zusammenhang mit einer nicht dargestellten Prozessapparatur beispielsweise zur Durchführung von Trocknungs-, Granulier- und Filmcoating-Prozessen verwendet. Bei einem solchen Trocknungs-, Granulier- und Filmcoating-Prozess wird Prozessluft benötigt, um das in dem Prozess behandelte Gut beispielsweise mit Trocknungsluft einer bestimmten Temperatur und einem bestimmten Feuchtigkeitsgehalt und unter einem bestimmten Druck zu beaufschlagen.

Die Vorrichtung 10 kann entsprechend als Zuluftanlage zur Zuführung frischer Prozessluft oder als Abluftanlage zur Abführung verbrauchter Prozessluft verwendet werden, wobei die verbrauchte Prozessluft in der Vorrichtung 10 beispielsweise wieder rekonditioniert werden kann.

Die Vorrichtung 10 weist ein Gehäuse 12 auf, in dessen Innenraum 14 eine Mehrzahl von Aggregaten 16, 18, 20, 22 und 24 zur Behandlung der Prozessluft angeordnet sind, die durch den Innenraum 14 des Gehäuses 12 und durch die Aggregate strömt.

Das Aggregat 16 ist ein Ventilator zur Erzeugung der Prozessluftströmung, wobei der Ventilator 16 beispielsweise im Fall des Betreibens der Vorrichtung 10 als Zuluftanlage die Prozessluft mit einem Überdruck in Richtung eines Pfeiles 26 fördert. In einem solchen Anwendungsfall ist die Vorrichtung 10 eingangsseitig mit einem Luftzufuhrrohr 28 und ausgangsseitig mit einem Luftabfuhrrohr 30 verbunden, das zu der oben erwähnten nicht dargestellten Prozessapparatur führt.

Im Fall eines Betriebes der Vorrichtung 10 als Abluftanlage sind die Rollen des Luftzufuhrrohres 28 und des Luftabfuhrrohres 30 entsprechend vertauscht. Die Anordnung des Ventilators 16 ist jedoch dieselbe, da praktischerweise beim Betrieb der Vorrichtung 10 als Zuluftanlage der Ventilator 16 am stromaufwärtigen Ende und im Fall des Betriebs der Vorrichtung 10 als Luftabfuhranlage der Ventilator 16 am stromabwärtigen Ende der Vorrichtung 10 angeordnet ist.

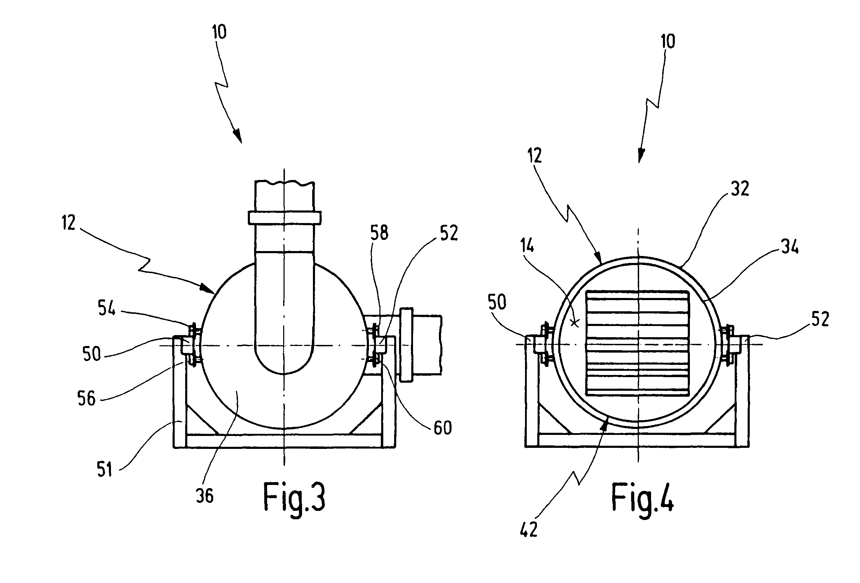

Das Gehäuse 12 ist, wie aus Figuren 3 und 4 hervorgeht, zylindrisch ausgebildet.

Das Gehäuse 12 ist insbesondere doppelwandig ausgebildet, das heißt das Gehäuse 12 weist einen äußeren Mantel 32 und einen inneren Mantel 34 auf. Sowohl der äußere Mantel 32 als auch der innere Mantel 34 sind im Querschnitt gesehen kreisförmig und über ihren Umfang gesehen vollständig geschlossen. Auf diese Weise wird eine besonders hohe Dichtigkeit und Druckfestigkeit bei gleichzeitiger Isolierung des Innenraums 14 von der Umgebung bewirkt. Der innere Mantel 34 bildet dabei vorzugsweise den statisch tragenden Teil des Gehäuses 12. Zwischen dem inneren Mantel 34 und dem äußeren Mantel 32 ist (nicht dargestellt) rundherum eine Isolierschicht zwischengelegt. Um diese Isolierschicht herum ist der äußere Mantel 32 herumgelegt und von dem inneren Mantel 34 abnehmbar verspannt. Die Lösbarkeit des äußeren Mantels 32 hat den Vorteil, dass die zuvor genannte Isolierschicht von Zeit zu Zeit durch Abnehmen des äußeren Mantels 32 kontrolliert und auf einfach zu handhabende Weise ggf. erneuert werden kann.

Bei den weiteren Aggregaten 18, 20, 22 und 24 handelt es sich beispielsweise um Wärmeaustauscher, Aggregate zur Einstellung einer bestimmten Feuchtigkeit der Prozessluft und um Filter zum Entstauben der Prozessluft.

Das Gehäuse 12 ist in seiner Längsrichtung, das heißt in der Zeichenebene der Figuren 1 und 2 aus mehreren Gehäuseschüssen 36, 38, 40, 42, 44 zusammengesetzt, wobei die einzelnen Gehäuseschüsse, im gezeigten Ausführungsbeispiel fünf an der Zahl, jeweils voneinander trennbar sind, wie in Fig. 2 dargestellt ist. Die Gehäuseschüsse 36-44 sind in im Wesentlichen horizontaler Anordnung hintereinander angeordnet.

Jeder einzelne Gehäuseschuss 36 - 44 ist für sich zylindrisch und doppelwandig ausgebildet.

An ihren jeweils benachbarten stirnseitigen Enden, wie für stirnseitige Enden 46 und 48 der Gehäuseschüsse 36 und 38 in Fig. 2 dargestellt, sind die einzelnen Gehäuseschüsse 36 - 44 über entsprechende, nicht näher dargestellte Verschlüsse dicht miteinander verbunden. An den stirnseitigen Enden, beispielsweise den Enden 46 und 48, sind entsprechende Ringdichtungen statischer oder pneumatischer Art vorhanden, um die hohe Dichtigkeit zu gewährleisten. Bevorzugt sind dabei pneumatische O-förmige Dichtungen. An den jeweiligen Enden 46 und 48 der Gehäuseschüsse 36 - 44 sind zur Verbindung der einzelnen Gehäuseschüsse 36 - 44 kreisförmige Profilflansche ausgebildet, in denen die jeweiligen pneumatischen Dichtungen aufgenommen sind.

Anstelle von einzelnen an jedem Gehäuseschuss 36 - 44 vorgesehenen Verschlüssen können alle Gehäuseschüsse 36 - 44 auch über eine gemeinsame oder mehrere gemeinsame Spannstangen miteinander verbunden und verspannt werden, die alle Gehäuseschüsse überspannen.

Die einzelnen Gehäuseschüsse 36 - 44 sind in Längsrichtung der Vorrichtung 10 an zwei seitlich angeordneten Schienen 50 und 52 verfahrbar, wobei die Schienen 50 und 52 in dem gezeigten Ausführungsbeispiel auf Höhe der Mittelebene des Gehäuses 12 angeordnet sind. Die Schienen sind über einen Tragrahmen 51 auf dem Boden befestigt. An den Gehäuseschüssen 36 bis 44 sind dazu außenseitig Gleitrollen 54 bis 60 angeordnet, wie dies für den Gehäuseschuss 36 in Fig. 3 dargestellt ist. Über die Gleitrollen 54 - 60 ist der Gehäuseschuss 36 an den Schienen 50, 52 verfahrbar gelagert. Entsprechendes gilt für die übrigen Gehäuseschüsse 38 - 44.

Im Betriebszustand der Vorrichtung 10 zur Prozessluftkonditionierung und/oder -entsorgung sind die Gehäuseschüsse 36 - 44 dicht miteinander verbunden, wie in Fig. 1 dargestellt ist. Das gesamte Gehäuse 12 ist somit hermetisch dicht gegen die Umgebung abgedichtet und isoliert.

Wenn nun Wartungsarbeiten oder Reinigungsarbeiten an den Aggregaten 16 - 24 oder der Innenseite des Gehäuses 12 vorgenommen werden sollen, werden die zuvor erwähnten Verschlüsse gelöst, wonach sich die einzelnen Gehäuseschüsse 36 - 44 entlang der Schienen 50 und 52 verfahren und somit voneinander beabstanden lassen, wodurch dem Wartungspersonal unmittelbar die Sicht auf das stirnseitige offene Ende jedes Gehäuseschusses 36 - 44 ermöglicht wird.

Die Gehäuseschüsse 36 - 44 sind in ihrer Länge vorzugsweise so angepasst, dass sie im Wesentlichen der axialen Erstreckung der einzelnen Aggregate 16 bis 24 entsprechen, mit anderen Worten der jeweilige Gehäuseschuss 36 - 44 axial gegenüber dem darin aufgenommenen Aggregat 16 - 24 keinen oder keinen übermäßigen Überstand aufweist, wodurch die Zugänglichkeit der Aggregate 16 bis 24 noch weiter verbessert wird.

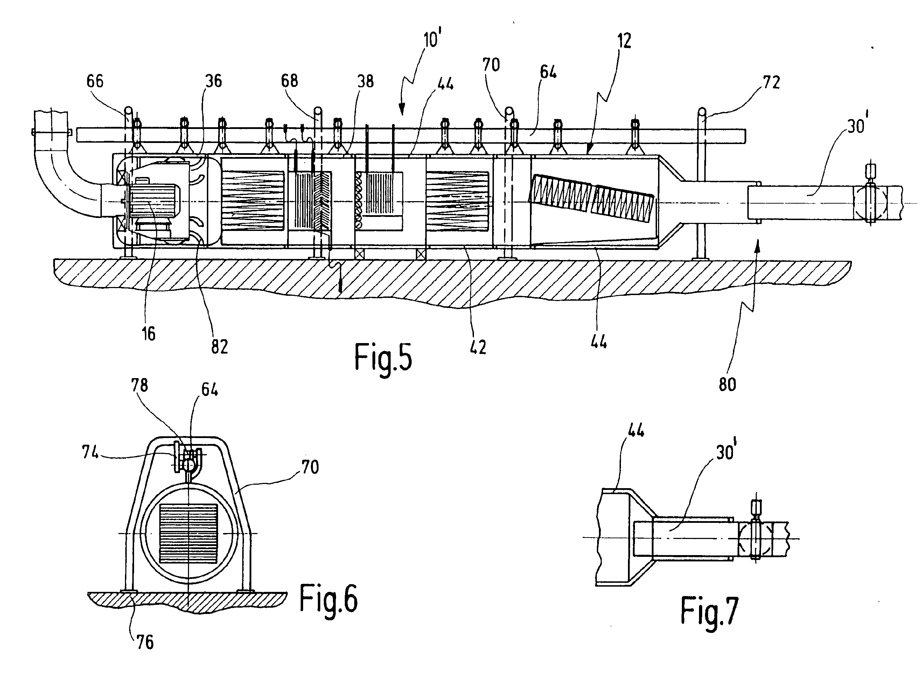

In Figuren 5 bis 7 ist in geringfügiger Abwandlung der Vorrichtung 10 in Figuren 1 bis 4 eine mit dem allgemeinen Bezugszeichen 10' versehene Vorrichtung zur Prozessluftkonditionierung und/oder -entsorgung dargestellt, die sich von der Vorrichtung 10 durch die Art und Weise der Lagerung und Führung der einzelnen Gehäuseschüsse 36 - 44 unterscheidet.

Anstelle der seitlich angeordneten Schienen 50 und 52 der Vorrichtung 10 in Figuren 1 bis 4 sind die einzelnen Gehäuseschüsse 36 - 44 der Vorrichtung 10' an einer über dem Gehäuse 12 angeordneten Schiene 64 aufgehängt. Die Schiene 64 ist in Form einer Rohrstange ausgebildet. Die Schiene 64 ist über eine Mehrzahl von bügelförmigen Ständern 66 - 72 mit einer entsprechenden Anzahl von Traversen 74 fest mit dem Boden 76 verbunden.

Jeder einzelne Gehäuseschuss 36 - 44 weist eine oder mehrere, wobei die Anzahl von der axialen Erstreckung des jeweiligen Gehäuseschusses abhängig ist, Gleitrollen 78 auf, über die der jeweilige Gehäuseschuss 36 - 44 an der Schiene 64 verfahrbar gelagert ist.

Ein weiterer Unterschied der Vorrichtung 10' zur Vorrichtung 10 besteht in der Verbindung des Luftabfuhrrohres 30' mit dem Gehäuseschuss 44. Das Luftabfuhrrohr 30' ist mit dem Gehäuseschuss 44 über eine Teleskoprohrverbindung 80 verbunden, die entsprechend abgedichtet ist. Beim Verfahren des Gehäuseschusses 47 zu Wartungszwecken bleibt das Luftabfuhrrohr 30' entsprechend unbeweglich, während der Gehäuseschuss 44 auf das Luftabfuhrrohr 30' aufgleitet, wie in Fig. 7 dargestellt ist.

Sowohl bei der Vorrichtung 10 als auch bei der Vorrichtung 10' ist das Aggregat 16 in Form des Ventilators an die zylindrische Ausgestaltung des Gehäuses 12 angepasst. Die einzelnen Ventilatorflügel 82 weisen einen Außendurchmesser auf, der an den Innendurchmesser des Gehäuses 12 angepasst ist, so dass das Gehäuse 12 bzw. der Gehäuseschuss 36 gleichzeitig das Gehäuse des Ventilators bildet, ohne dass, wie im Falle eines kubischen Gehäuses, der Ventilator eine eigene zusätzliche Einhäusung benötigt, wodurch der konstruktive Aufwand der Vorrichtung 10 und der Vorrichtung 10' weiter verringert ist. Der Antriebsmotor 17 des Ventilators 16 ist dabei direkt am Gehäuseendstück 19 schwingungsdämpfend gelagert.

## Patentansprüche

1. Vorrichtung zur Prozessluftkonditionierung und/oder -entsorgung, mit einem sich im Wesentlichen horizontal erstreckenden Gehäuse (12), in dessen Innenraum (14) eine Mehrzahl von Aggregaten (16, 18, 20, 22, 24) zur Behandlung der Prozessluft angeordnet sind, wobei das Gehäuse (12) zylindrisch ausgebildet ist, **dadurch gekennzeichnet, dass** das Gehäuse (12) in Längsrichtung aus mehreren voneinander trennbaren Gehäuseschüssen (36, 38, 40, 42, 44) zusammengesetzt ist, die im Wesentlichen horizontal hintereinander angeordnet sind, und dass die einzelnen Gehäuseschüsse (36, 38, 40, 42, 44) in Längsrichtung an einer oder mehreren Schienen (50, 52; 64) verfahrbar gelagert sind.

2. Vorrichtung nach Anspruch 1, **dadurch gekennzeichnet, dass** das Gehäuse (12) doppelwandig ausgebildet ist.

3. Vorrichtung nach Anspruch 1 oder 2, **dadurch gekennzeichnet, dass** die einzelnen Gehäuseschüsse (36, 38, 40, 42, 44) über an ihren stirnseitigen Enden (46, 48) angeordnete Verschlüsse oder über eine oder mehrere die Gehäuseschüsse (36, 38, 40, 42, 44) überspannende Spannstangen dicht miteinander verbunden sind.

4. Vorrichtung nach einem der Ansprüche 1 bis 3, **dadurch gekennzeichnet, dass** benachbarte Gehäuseschüsse (36, 38, 40, 42, 44) an ihren Verbindungsstellen mittels pneumatischer Dichtungen abgedichtet sind.

5. Vorrichtung nach einem der Ansprüche 1 bis 4, **dadurch gekennzeichnet, dass** die Gehäuseschüsse (36, 38, 40, 42, 44) außenseitig Gleitrollen (54, 56, 58, 60; 78) aufweisen, mit denen sie an der bzw. den Schienen (50, 52; 64) gelagert sind.

6. Vorrichtung nach einem der Ansprüche 1 bis 5, **dadurch gekennzeichnet, dass** jeweils eine Schiene (50, 52) seitlich des Gehäuses (12) angeordnet ist.

7. Vorrichtung nach einem der Ansprüche 1 bis 5, **dadurch gekennzeichnet, dass** die Gehäuseschüsse (36, 38, 40, 42, 44) an einer über dem Gehäuse (12) angeordneten Schiene aufgehängt sind.

8. Vorrichtung nach einem der Ansprüche 1 bis 7, **dadurch gekennzeichnet, dass** eines (16) der Aggregate (16, 18, 20, 22, 24) ein Ventilator ist, und dass das Gehäuse (12) gleichzeitig das Ventilatorgehäuse bildet.

## Claims

1. An apparatus for conditioning and/or disposing process air, comprising a housing (12) extending substantially horizontally, in the interior (14) of which a plurality of aggregates (16, 18, 20, 22, 24) for treating the process air are arranged, wherein the housing (12) is configured cylindrically, **characterized in that** the housing (12) is assembled in longitudinal direction of several housing segments (36, 38, 40, 42, 44) separable from one another, which housing segments are substantially horizontally arranged one after another, and that the single housing segments (36, 38, 40, 42, 44) are supported on one or more rails (50, 52; 64) in a manner displaceable in longitudinal direction.

2. The apparatus of claim 1, **characterized in that** the housing (12) is configured in double-walled fashion.

3. The apparatus of claim 1 or 2, **characterized in that** the single housing segments (36, 38, 40, 42, 44) are connected with one another in sealed fashion through locking devices arranged on their facing ends (46, 48) or through one or more tensioning rods spanning the housing segments (36, 38, 40, 42, 44).

4. The apparatus of any of claims 1 through 3, **characterized in that** adjacent housing segments (36, 38, 40, 42, 44) are sealed at their junctions by means of pneumatic seals.

5. The apparatus of any of claims 1 through 4, **characterized in that** the housing segments (36, 38, 40, 42, 44) have slide rollers (54, 56, 58, 60; 78) on outer sides of the housing segments, by means of which slide rollers the housing segments are supported on the one rail or the rails (50, 52; 64).

6. The apparatus of any of claims 1 through 5, **characterized in that** in each case one rail (50, 52) is arranged laterally of the housing (12).

7. The apparatus of any of claims 1 through 5, **characterized in that** the housing segments (36, 38, 40, 42, 44) are suspended on a rail arranged above the housing (12).

8. The apparatus of any of claims 1 through 7, **characterized in that** one (16) of the aggregates (16, 18, 20, 22, 24) is a ventilator, and that the housing (12) at once forms the ventilator housing.

## Revendications

1. Dispositif pour conditionner et/ou éliminer de l'air de traitement, avec un boîtier (12) s'étendant sensiblement horizontalement, à l'intérieur (14) duquel une pluralité de groupes (16, 18, 20, 22, 24) est disposée pour le traitement de l'air de traitement, sachant que le boîtier (12) est réalisé de manière cylindrique, **caractérisé en ce que** le boîtier (12) est composé dans le sens longitudinal de plusieurs tronçons de boîtier (36, 38, 40, 42, 44) séparables les uns des autres qui sont disposés sensiblement horizontalement les uns derrière les autres, et **en ce que** les tronçons de boîtier (36, 38, 40, 42, 44) individuels sont logés de manière mobile dans le sens longitudinal sur un ou plusieurs rails (50, 52 ; 64).

2. Dispositif selon la revendication 1, **caractérisé en ce que** le boîtier (12) est réalisé à double paroi.

3. Dispositif selon la revendication 1 ou 2, **caractérisé en ce que** les tronçons de boîtier individuels (36, 38, 40, 42, 44) sont reliés de manière étanche les uns aux autres par des fermetures disposées sur leurs extrémités côté frontal (46, 48) ou par un ou plusieurs tendeurs recouvrant les tronçons de boîtier (36, 38, 40, 42, 44).

4. Dispositif selon l'une quelconque des revendications 1 à 3, **caractérisé en ce que** des tronçons de boîtier (36, 38, 40, 42, 44) contigus sont rendus étanches sur leurs points de liaison à l'aide de garnitures pneumatiques.

5. Dispositif selon l'une quelconque des revendications 1 à 4, **caractérisé en ce que** les tronçons de boîtier (36, 38, 40, 42, 44) présentent des galets côté extérieur (54, 56, 58, 60 ; 78), avec lesquels ils sont logés sur le ou les rails (50, 52 ; 64).

6. Dispositif selon l'une quelconque des revendications 1 à 5, **caractérisé en ce que** respectivement un rail (50, 52) est disposé sur le côté du boîtier (12).

7. Dispositif selon l'une quelconque des revendications 1 à 5, **caractérisé en ce que** les tronçons de boîtier (36, 38, 40, 42, 44) sont suspendus sur un rail disposé au-dessus du boîtier (12).

8. Dispositif selon l'une quelconque des revendications 1 à 7, **caractérisé en ce que** l'un (16) des groupes (16, 18, 20, 22, 24) est un ventilateur, et **en ce que** le boîtier (12) forme simultanément le boîtier de ventilateur.
